# EUROPÄISCHE PATENTANMELDUNG

(11) **EP 4 661 071 A1**
(43) Veröffentlichungstag der Anmeldung: **10.12.2025**
(21) Anmeldenummer: 24401018.7
(22) Anmeldetag: 04.06.2024
(51) Int. Cl.: H01L 23/00, H04L 9/32, C08J 5/18, H01L 23/552

(54) **VORRICHTUNG ZUR BEREITSTELLUNG EINER PHYSIKALISCH UNKLONBAREN FUNKTION, SOWIE HERSTELLUNGSVERFAHREN**

(71) Anmelder: Fraunhofer-Gesellschaft zur Förderung der angewandten Forschung e.V., 80686 München (DE)
(72) Erfinder: BOLLMANN, Dieter, 80686 München (DE); SEDLMAIER, Alexander, 80686 München (DE)
(74) Vertreter: König, Andreas Rudolf

(57) **Zusammenfassung**

Ausführungsbeispiele umfassen ein Verfahren zur Herstellung einer Vorrichtung zur Bereitstellung einer physikalisch unklonbaren Funktion, die auf einer charakteristischen Struktur basiert. Das Verfahren weist die folgenden Merkmale auf: Erzeugen der charakteristischen Struktur mittels lokalem Entmischen eines Precursors, um eine Vielzahl von Domänen eines ersten Stoffs und eine Vielzahl von Domänen eines zweiten Stoffs zu erhalten, um eine zufällige räumliche Verteilung der Domänen des ersten und zweiten Stoffs in einem Messbereich zu erhalten, wobei Domänen des ersten Stoffs und Domänen des zweiten Stoffs sich in einer physikalischen Eigenschaft unterscheiden, so dass Unterschiede in der physikalischen Eigenschaft die physikalisch unklonbare Funktion zumindest teilweise bereitstellen.

Ferner umfassen Ausführungsbeispiele Vorrichtungen zur Bereitstellung einer physikalisch unklonbaren Funktion.

## Beschreibung

### Technisches Gebiet

Ausführungsbeispiele umfassen Vorrichtungen zur Bereitstellung einer physikalisch unklonbaren Funktion (PUF), sowie Herstellungsverfahren zur Herstellung solcher Vorrichtungen.

Ausführungsbeispiele umfassen PUF-Strukturen durch spontane Strukturbildung, Vorrichtungen mit PUF-Strukturen durch spontane Strukturbildung, sowie Methoden zur Herstellung solcher PUF-Strukturen und Vorrichtungen.

### Hintergrund der Erfindung

PUF-Strukturen (engl.: Physical Unclonable Functions) werden benutzt, um eindeutige, nicht wiederholbare Schlüssel zu generieren. Der Schlüssel wird in sicherheitsrelevanten, technischen Systemen wie ein Fingerabdruck dazu benutzt, um die Zugriffsberechtigung zu gespeicherten Daten zu prüfen.

Falls die PUF-Struktur durch einen Angriff von außen in ihren Eigenschaften verändert wurde, erkennt ein Algorithmus den Unterschied des aus den aktuell gemessenen Eigenschaften generierten Schlüssel im Vergleich zum abgespeicherten Schlüssel. Damit wird ein Angriff erkannt und eine Schutzmaßnahme, wie Löschen der sensiblen Daten, kann angewendet werden.

Die Herstellung von PUF-Strukturen ist dabei herausfordernd, aufgrund einander entgegenstehender Zielsetzungen. Zum einen sollte die PUF möglichst sicher sein, also damit insbesondere unklonbar, was einer möglichst zufallsbasierten Eigenschaft einer Struktur, welche die PUF ausbildet, entspricht. Zum anderen ist es für die Produktion solcher Strukturen wichtig, dass die Strukturen gut reproduzierbar, also reproduzierbar aber in jeweils individuell zufälliger Ausgestaltung, sind und vor allem, dass die Strukturen zuverlässig herstellbar sind. Somit sollten die Eigenschaften der erzeugten Vorrichtungen, mit Ausnahme der die PUF definierenden Merkmale, möglichst vorherbestimmbar sein, z.B. in Hinblick auf die Abmessungen derartiger Vorrichtungen bzw. zugehöriger Strukturen.

In Anbetracht dessen ist die Aufgabe der vorliegenden Erfindung die Bereitstellung eines Konzeptes für eine Vorrichtung für eine physikalisch unklonbare Funktion, sowie ein zugehöriges Herstellungsverfahren, welches einen verbesserten Kompromiss zwischen einer Sicherheit und Qualität der physikalisch unklonbaren Funktion, bei zugleich robuster und zuverlässiger Herstellung ermöglicht.

Diese Aufgabe wird von den Gegenständen der unabhängigen Patentansprüche gelöst. Erfindungsgemäße Weiterbildungen sind in den Unteransprüchen definiert.

### Zusammenfassung der Erfindung

Ausführungsbeispiele umfassen ein Verfahren zur Herstellung einer Vorrichtung zur Bereitstellung einer physikalisch unklonbaren Funktion, die auf einer charakteristischen Struktur basiert. Das Verfahren weist die folgenden Merkmale auf: Erzeugen der charakteristischen Struktur mittels lokalem Entmischen eines Precursors, um eine Vielzahl von Domänen eines ersten Stoffs und eine Vielzahl von Domänen eines zweiten Stoffs zu erhalten, um eine zufällige räumliche Verteilung der Domänen des ersten und zweiten Stoffs in einem Messbereich zu erhalten, wobei Domänen des ersten Stoffs und Domänen des zweiten Stoffs sich in einer physikalischen Eigenschaft unterscheiden, so dass Unterschiede in der physikalischen Eigenschaft die physikalisch unklonbare Funktion zumindest teilweise bereitstellen.

Die Erfinder haben erkannt, dass basierend auf einem Entmischungsprozess, ausgehend von einem Precursor, Domänen von zumindest zwei verschiedenen Stoffen mit einer zufälligen Verteilung erzeugt werden können, um eine PUF bereitzustellen. Dazu sind die Domänen des ersten Stoffs und die Domänen des zweiten Stoffs anhand einer physikalischen Eigenschaft unterscheidbar, sodass anhand der Unterschiede, basierend auf der zufälligen Verteilung der Domänen, die unklonbare Funktion zumindest teilweise bereitstellt werden kann.

Teilweise beschreibt hierbei, dass auch noch andere optionale Elemente oder Bauteile der Vorrichtung einen Einfluss auf die unklonbare Funktion, also deren Definition bzw. Auswertung, haben können.

Bei dem Precursor kann es sich bspw. um ein Gemisch aus zumindest zwei Stoffen handeln, oder auch um einen einzelnen Stoff, in dem ein zweiter Stoff, z.B. mittels eines Lösungsmittels, gelöst ist. Ein entsprechendes Gemisch kann dabei in homogener oder auch inhomogener Form vorliegen. Insbesondere kann es sich bei dem Precursor also auch um ein Gemenge handeln. Der Precursor kann vor der Reaktion bspw. ein einheitlicher Stoff sein, der bei einer Änderung der Umgebungsbedingungen (z.B. Abkühlen, Aufheizen, Druckänderung, Lichteinfall, UV-Licht) in zumindest zwei Stoffe zerfällt. "Zumindest zwei", weil zusätzlich noch ein entsprechendes Lösungsmittel vorhanden sein kann, das, z.B. durch Abpumpen, entfernt wird. Der Precursor kann alternativ oder zusätzlich ein Stoffgemisch mit zwei oder mehr homogen oder inhomogen vermischten Komponenten oder Stoffen sein oder umfassen, in welche oder zumindest Teilmengen hiervon sich der Precursor entmischen kann. So kann bspw. ein in dem Precursor optional enthaltenes Lösungsmittel entweichen und im entmischten Zustand in großen Teilen oder vollständig fehlen.

Der Precursor kann also eine Zusammensetzung sein, aus der mittels einer Entmischung verschiedenartige Domänen erzeugt werden können. Unter Entmischung ist hierbei je nach Ausgestaltung des Precursors eine Vielzahl von Vorgängen zu verstehen, die zu dem Ergebnis unterschiedlicher Domänen führen.

Beispielsweise kann der Precursor in einer ersten Phase, also z.B. einer flüssigen Phase, z.B. in einer homogenen Phase, oder auch z.B. in einer im Wesentlichen homogenen Phase bereitgestellt werden, wobei mittels einer Zustandsänderung des Precursors ein Phasenübergang verursacht wird, sodass der Precursor zumindest teilweise, also zumindest lokal, in die einzelnen Domänen zerfällt. Ganz allgemein können zumindest zwei verschiedene Arten von Domänen oder Phasen erzeugt werden. Ausführungsbeispiele können aber auch mehr verschiedene Domänen oder Phasen aufweisen, z.B. in einer charakteristischen Struktur mit drei Phasen.

Ein solches Entmischen kann bspw. auch ein Verdampfen oder Verdunsten eines optionalen Lösungsmittels umfassen, sodass sich ausgehend von dem Precursor Domänen eines oder mehrere gelöster Bestandteile bilden.

Die entmischungsbasierte Erzeugung der Domänen ermöglicht eine fertigungstechnisch einfache und vor allem zuverlässige Herstellung von Vorrichtungen zur Bereitstellung einer physikalisch unklonbaren Funktion. Entmischungsprozesse lassen sich beispielsweise zuverlässig über Abkühlkurven oder Druckänderungen steuern, um einen gut reproduzierbaren Herstellungsprozess zu gewährleisten, wobei die Entmischung jedoch zu einer inhärent zufallsbasierten Domänenverteilung und somit einer hohen Sicherheit von zugehörigen PUF führt.

Eine zentrale Idee besteht also darin einen Entmischungsprozess zu wählen, der zuverlässig und kontrollierbar verursacht und optional gestoppt werden kann (z.B., wenn gewünschte Domäneneigenschaft, wie bspw. eine Domänengröße, erreicht sind) aber zu einer zufälligen Domänenverteilung in der charakteristischen Struktur führt.

In anderen Worten umfassen Ausführungsbeispiele PUF-Strukturen mit einer nicht wiederholbaren Domänenverteilung in der charakteristischen Struktur, mit der ein Schlüssel generiert werden kann, mit dem erkannt werden kann, ob die Struktur verändert wurde.

Gemäß Ausführungsbeispielen umfasst das Verfahren ferner ein Anordnen einer Messstruktur, für eine Messung der physikalischen Eigenschaft, an einer Vielzahl von Teilbereichen in dem Messbereich, um die physikalisch unklonbare Funktion auszuwerten.

Eine Anordnung der Messstruktur in ausgewählten Teilbereichen ermöglicht die Auswertung der zufälligen Verteilung der Domänen anhand der physikalischen Eigenschaft. Insbesondere können Messstreifen, Messgitter oder Netzstrukturen zur Messung verwendet werden, um bspw. eine hohe Flexibilität der Vorrichtung, z.B. als Folie, zu gewährleisten. Der Abstand von Messpunkten zueinander kann bspw. unter 100 µm liegen, um einen engmaschige Überwachung zu gewährleisten.

Gemäß Ausführungsbeispielen wird das lokale Entmischen des Precursors mittels einer Selbstorganisation und/oder einer spontanen Strukturbildung des ersten und zweiten Stoffes durchgeführt. Die Erfinder haben erkannt, dass Entmischungsprozesse, welche zu einer Selbstorganisation oder spontanen Strukturbildung führen eine zufallsbasierte Verteilung der Domänen ermöglicht und gleichzeitig fertigungstechnisch einfach realisierbar sind. Insbesondere kann eine Selbstorganisation oder spontanen Strukturbildung mittels Prozessparametern kontrolliert durchgeführt werden, um zwar eine zufällige Verteilung der Domänen, aber günstige Domäneneigenschaften, wie bspw. Volumina der einzelnen Domänen einzustellen.

Gemäß Ausführungsbeispielen wird der Precursor in einer ersten Phase bereitgestellt und das lokale Entmischen des Precursors weist eine Änderung eines Zustands des Precursors auf, um einen Phasenübergang zu bewirken, um die Vielzahl von Domänen des ersten und zweiten Stoffs zu erhalten.

Der Phasenübergang kann bspw. von flüssig zu fest sein, oder aber bspw. auch von homogen zu heterogen. Bspw. kann ein Feststoff-Precursor eine homogene Verteilung zweier Stoffe aufweisen, die sich ordnen und einzelne, ebenfalls feste Domänen bilden. Ein homogenes Gemisch kann sich zu einzelnen Domänen entmischen, bspw. in Form eines flüssigen heterogenen Gemischs, mit einzelnen flüssigen, oder auch hochviskosen (z.B. gelartigen) Domänen, oder ein flüssiges Gemisch oder Gemenge kann in einzelne feste Domänen aushärten.

Gemäß Ausführungsbeispielen wird das lokale Entmischen des Precursors basierend auf einer Änderung der Temperatur des Precursors (z.B. Abkühlen, Aufheizen), und/oder basierend auf einer Änderung des Umgebungsdrucks des Precursors (z.B. einer Druckänderung des Precursors), und/oder basierend auf einer Bestrahlung des Precursors (z.B. Lichteinfall, z.B. mit UV-Licht), und/oder basierend auf einer Polymerisation des Precursors bewirkt. Alternativ oder zusätzlich kann der Precursor ferner ein Lösungsmittel umfassen und das lokale Entmischen des Precursors kann basierend auf einem Verdampfen des Lösungsmittels bewirkt werden. Insbesondere können also Umgebungsbedingungen des Precursors geändert werden, um die Domänen auszubilden. Alternativ oder zusätzlich kann die Entmischung (bspw. das lokale Entmischen) oder Polymerisation durch Zugabe eines weiteren Stoffes, wie bspw. eines Katalysators, ausgelöst werden.

Mittels der obigen Prozesseingriffe, also bspw. Zustandsänderungen, kann eine gut kontrollierbare Herstellung von erfindungsgemäßen Vorrichtungen bereitgestellt werden.

Gemäß Ausführungsbeispielen wird das lokale Entmischen des Precursors basierend auf einer Aggregation des ersten Stoffes an ersten Aggregationskernen und/oder einer Aggregation des zweiten Stoffes an zweiten Aggregationskernen bewirkt und das Verfahren weist ferner ein Beifügen von Partikeln zu dem Precursor auf, wobei die Partikel dazu ausgebildet sind, um Aggregationskerne für die Vielzahl von Domänen des ersten und/oder zweiten Stoffs beim lokalen Entmischen des Precursors zu bilden.

Mittels Aggregationskernen, also bspw. Partikeln, welche Keimstellen für ein Wachstum der Domänen bilden können, kann der Herstellungsprozess beschleunigt werden. Entmischungshemmnisse, wie bspw. in Analogie ein Siedeverzug einer überhitzten Flüssigkeit, können somit vermieden werden.

Hier sei darauf hingewiesen, dass Ausführungsbeispiele ganz allgemein Entmischungsprozesse aufweisen können, die ein Domänenwachstum umfassen. Das heißt, die Domänen können sich ausgehend von Keimstellen vergrößern und anwachsen. Dies ermöglicht ein gezieltes Anhalten des Prozesses, bspw. wenn die Domänen gewünschte Eigenschaften, wie bspw. eine gewisse Größe, erreicht haben.

Gemäß Ausführungsbeispielen zerfällt der Precursor beim lokalen Entmischen mittels einer Änderung der Umgebungsbedingungen in zumindest drei Stoffe, wobei die Vielzahl von Domänen von zumindest zwei der drei Stoffe gebildet werden. Der Precursor kann also bspw. ein Lösungsmittel umfassen, welches sich beim Entmischen verflüchtigt oder abgepumpt wird, sodass nur die Stoffe der Domänen, in Form der Domänen in der Vorrichtung verbleiben.

Ausführungsbeispiele umfassen eine Vorrichtung zur Bereitstellung einer physikalisch unklonbaren Funktion mit einer charakteristischen Struktur, wobei die charakteristische Struktur für die physikalisch unklonbare Funktion einen Messbereich mit Domänen eines ersten Stoffs und Domänen eines, von dem ersten Stoff verschiedenen und entmischten, zweiten Stoffs aufweist und wobei Domänen des ersten Stoffs und Domänen des zweiten Stoffs sich in einer physikalischen Eigenschaft unterscheiden.

Gemäß Ausführungsbeispielen umfasst die Vorrichtung ferner eine Messstruktur, die ausgebildet ist, um die physikalische Eigenschaft an einer Vielzahl von Teilbereichen in dem Messbereich zu messen, um die physikalisch unklonbare Funktion auszuwerten.

Ausführungsbeispiele umfassen eine Vorrichtung zur Auswertung einer physikalisch unklonbaren Funktion erhältlich durch eines der hierin und insbesondere vorig offenbarten Herstellungsverfahren.

Vorrichtungen gemäß Ausführungsbeispielen beruhen auf den gleichen bzw. ähnlichen Erkenntnissen und umfassen somit gleiche oder entsprechende Vorteile wie die vorig erläuterten Verfahren. Insbesondere können Vorrichtungen gemäß Ausführungsbeispielen Merkmale, Details und Funktionalitäten umfassen, die im Kontext von erfindungsgemäßen Verfahren offenbart werden. Selbiges gilt für Vorrichtungsmerkmale die gleichsam als entsprechende Verfahrensschritte zu verstehen sind.

Die obigen Vorrichtungen ermöglichen also eine einfache und zuverlässige Herstellung und insbesondere eine Ausgestaltung mit präzise einstellbaren Eigenschaften der Vorrichtung, wie bspw. Schichtdicken, da die stochastische Eigenschaft für die PUF in der Domänenverteilung und nicht der Vorrichtungsdimensionierung adressiert ist.

Gemäß Ausführungsbeispielen ist die Vorrichtung eine flache, biegbare Folie oder eine Beschichtung. Somit kann ein zu schützendes Objekt einfach und sicher umschlossen und damit geschützt werden.

Gemäß Ausführungsbeispielen ist eine Dicke der charakteristischen Struktur der Folie oder eine Dicke der charakteristischen Struktur der Beschichtung im Wesentlichen konstant. Beispielsweise kann eine Dicke der charakteristischen Struktur zu höchstens +/-2,5% oder zu höchstens +/-5% oder zu höchstens +/-10% oder zu höchstens +/-20% im Messbereich schwanken. Dies ermöglicht eine Herstellung mittels zuverlässig reproduzierbaren Herstellungsprozessen, da keine Bereitstellung der PUF aufgrund von Dickenvariationen notwendig ist, die z.B. anhand im Grenzbereich betriebener Herstellungsprozesse realisiert wird.

Ferner hat eine im Wesentlichen konstante, also bspw. näherungsweise konstante, Dicke den Vorteil, dass die Folie somit auch für Objekte, die auf eine möglichst ebene Oberfläche angewiesen sind und insbesondere auch als Zwischenschicht für weitere Schichten, die eine möglichst ebene, also glatte, Oberfläche benötigen, gut geeignet ist.

Gemäß Ausführungsbeispielen erstrecken sich Domänengrenzen zwischen dem ersten Stoff und dem zweiten Stoff zu einem überwiegenden Anteil, zum Beispiel zu mindestens 50% oder zum Beispiel zu mindestens 75% oder zum Beispiel zu mindestens 90%, über eine gesamte Dicke der charakteristischen Struktur. Dies ermöglicht eine Ausgestaltung von Messpunkten oder Messstellen für die PUF in Form von im Wesentlichen durch eine Domänenart bedingten Messwerten der physikalischen Eigenschaft. Somit werden vermehrt Extremwerte der physikalischen Eigenschaft an jeweiligen Messpunkten gemessen und keine Mittelwerte verschiedenartiger Domänen, was die Qualität der PUF verbessert.

Gemäß Ausführungsbeispielen sind die Domänen des ersten und zweiten Stoffes dazu ausgebildet, um ihre relative Anordnung zueinander und die physikalische Eigenschaft für zumindest ein Jahr oder für zumindest fünf Jahre oder für zumindest 10 Jahre ohne äußere Einwirkung nicht oder nur so geringfügig zu verändern, dass der Schlüssel aufgrund der physikalisch unklonbaren Funktion unverändert bleibt. Somit kann die PUF mit großer Robustheit und Zuverlässigkeit ausgewertet werden.

Gemäß Ausführungsbeispielen weist die Vorrichtung eine Messstruktur auf, die ausgebildet ist, um die physikalische Eigenschaft an einer Vielzahl von Teilbereichen in dem Messbereich zu messen, um die physikalisch unklonbare Funktion auszuwerten. Dabei weist die Messstruktur Leiterbahnen in zwei Leiterbahnebenen auf, die sich überkreuzen und dazu ausgebildet sind, um durch eine Messung von Kapazitätswerten der charakteristischen Struktur an Teilbereichen, an denen sich die Leiterbahnen der zwei Leiterbahnebenen überkreuzen, die physikalisch unklonbare Funktion auszubilden.

Die Erfinder haben erkannt, dass eine Auswertung von Kapazitätswerten an den verschiedenartigen Domänen eine besonders robuste und zuverlässige Definition einer PUF ermöglicht.

Gemäß Ausführungsbeispielen ist die charakteristische Struktur zumindest teilweise, oder optional bspw. sogar vollständig, zwischen den zwei Leiterbahnebenen angeordnet. Dies ermöglicht eine Auslesbarkeit der PUF mit geringer Komplexität.

Gemäß Ausführungsbeispielen ist die charakteristische Struktur zumindest teilweise zwischen einer der Leiterbahnebenen und einer Schirmungsstruktur angeordnet. Alternativ oder zusätzlich kann die charakteristische Struktur zumindest teilweise zwischen einer ersten Leiterbahnebene der zwei Leiterbahnebenen und einer ersten Schirmungsstruktur und zwischen einer zweiten Leiterbahnebene der zwei Leiterbahnebenen und einer zweiten Schirmungsstruktur angeordnet sein. Die Erfinder haben erkannt, dass somit die PUF mittels eines Einflusses von Streukapazitäten mittels des kapazitiven Einflusses von Domänen zwischen Leiterbahnebenen und einer Schirmungsstruktur verbessert werden kann. Die charakteristische Struktur kann hierzu in anderen Worten also bspw. nur auf einer Lage zwischen Leiterbahnstruktur und leitfähiger Schirmung vorhanden sein, aber auch auf zwei, also bspw. beiden, Seiten zwischen Leiterbahnebene und leitfähiger Schirmung.

Gemäß Ausführungsbeispielen ist ein Volumen der charakteristischen Struktur in Teilbereichen, an denen sich die Leiterbahnen der zwei Leiterbahnebenen überkreuzen, zumindest zu 75% oder zumindest zu 80% oder zumindest zu 90% oder zumindest zu 95% entweder durch eine einzelne Domäne des ersten oder durch eine einzelne Domäne des zweiten Stoffes gebildet.

Somit werden ebenfalls im Wesentlichen Extremwerte der physikalischen Eigenschaft an jeweiligen Messpunkten gemessen und keine Mittelwerte verschiedenartiger Domänen, was die Qualität der PUF verbessert.

Gemäß Ausführungsbeispielen liegt ein Verhältnis eines Gesamtvolumens von Domänen des ersten Stoffes und von Domänen des zweiten Stoffes der charakteristischen Struktur zwischen 30:70 und 70:30, oder zwischen 40:60 und 60:40, oder zwischen 45:55 und 55:45.

Dies ermöglicht eine Bereitstellung von besonders aussagekräftigen und damit sicheren PUF.

### Figurenkurzbeschreibung

Ausführungsbeispiele gemäß der vorliegenden Offenbarung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der offenbarungsgemäßen Vorrichtung als auch als entsprechende Verfahrensschritte des offenbarungsgemäßen Verfahrens zu verstehen sind, und auch entsprechende Verfahrensschritte des offenbarungsgemäßen Verfahrens davon abgeleitet werden können. Es zeigen:
- Fig. 1: eine schematische Ansicht eines Precursors sowie einer Vorrichtung zur Bereitstellung einer physikalisch unklonbaren Funktion gemäß Ausführungsbeispielen;
- Fig. 2: eine symmetrische Gauß-Verteilung;
- Fig. 3: eine Poisson-Verteilung;
- Fig. 4: eine schematische Ansicht einer Vorrichtung gemäß Ausführungsbeispielen mit optionalen Leiterbahnen;
- Fig. 5: eine schematische Ansicht einer Vorrichtung gemäß Ausführungsbeispielen mit optionaler Schirmung;
- Fig. 6: eine Top-Hat-Verteilung;
- Fig. 7: eine Verteilung mit zwei Maxima; und
- Fig. 8: eine schematische Ansicht einer charakteristischen Struktur basierend auf einer Strukturbildung bei Mischung aus PS und PVME.

### Detaillierte Beschreibung der Ausführungsbeispiele gemäß den Figuren

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

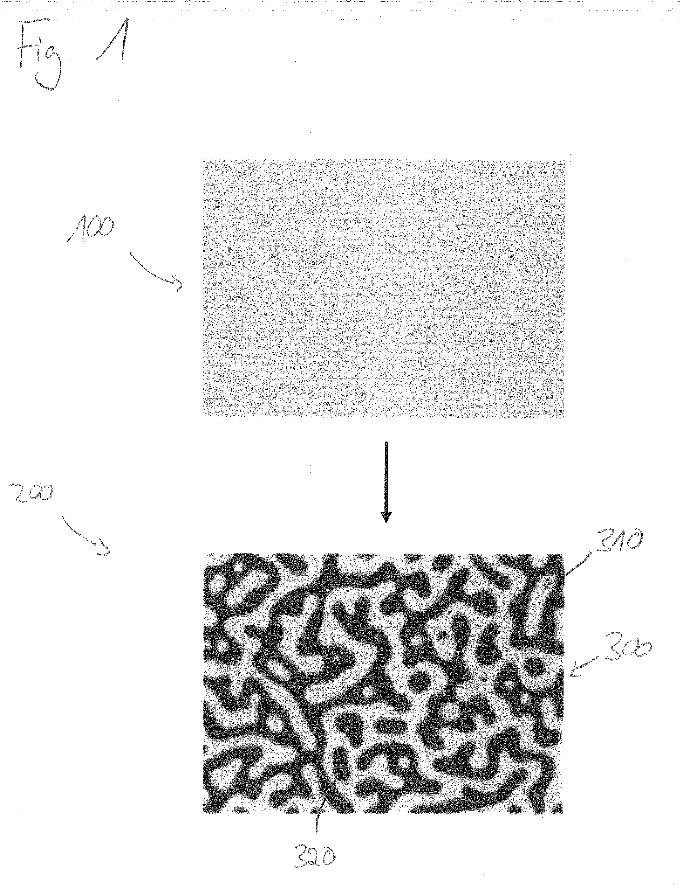

Fig. 1 zeigt eine schematische Ansicht eines Precursors sowie einer Vorrichtung zur Bereitstellung einer physikalisch unklonbaren Funktion gemäß Ausführungsbeispielen. Fig. 1 zeigt einen Precursor 100, sowie eine Vorrichtung zur Bereitstellung einer physikalisch unklonbaren Funktion 200 mit einer charakteristische Struktur 300.

Die charakteristische Struktur 300 weist für die physikalisch unklonbare Funktion einen Messbereich mit Domänen 310 eines ersten Stoffs und Domänen 320 eines, von dem ersten Stoff verschiedenen und entmischten, zweiten Stoffs auf. Die Domänen 310 des ersten Stoffs und die Domänen 320 des zweiten Stoffs unterscheiden sich in einer physikalischen Eigenschaft.

Ein Verfahren gemäß Ausführungsbeispielen zur Herstellung einer Vorrichtung zur Bereitstellung einer physikalisch unklonbaren Funktion umfasst ein Erzeugen der charakteristischen Struktur 300 mittels lokalem Entmischen des Precursors 100 bzw. ein lokales Entmischen von Stoffen des Precursors, um eine Vielzahl von Domänen 310 des ersten Stoffs und eine Vielzahl von Domänen 320 eines zweiten Stoffs zu erhalten, um eine zufällige räumliche Verteilung der Domänen des ersten und zweiten Stoffs in einem Messbereich zu erhalten. Wie vorig erläutert, unterscheiden sich Domänen 310 des ersten Stoffs und Domänen 320 des zweiten Stoffs in der physikalischen Eigenschaft, so dass Unterschiede in der physikalischen Eigenschaft die physikalisch unklonbare Funktion zumindest teilweise bereitstellen.

Die Erzeugung der Domänen kann dabei bspw. auf einer Selbstorganisation und/oder einer spontanen Strukturbildung des ersten und zweiten Stoffes beruhen. Insbesondere kann ein Phasenübergang des Precursors 100 verursacht werden, bspw. mittels einer Änderung der Temperatur, des Drucks oder auch mittels einer Bestrahlung, um die Domänen 310, 320 zu bilden.

Das Herausbilden der Domänen 310, 320 kann ferner mittels einer Polymerisation oder auch einem Verdampfen eines Lösungsmittels verursacht werden. Ferner können optional gezielt Partikel (bspw. Verunreinigungen) in den Precursor eingebracht werden, welche als Keimstellen für das Domänenwachstum dienen können.

Im Folgenden wird eine Vielzahl optionaler Merkmale von Ausführungsbeispielen erläutert. Es wird darauf hingewiesen, dass die folgenden Merkmale, Details und Funktionalitäten individuell oder auch in Kombination in eine Vorrichtung nach Fig. 1 oder ein entsprechendes Verfahren nach Fig. 1 integriert werden können. Insbesondere werden Ausführungsbeispiele offenbart, welche auf der Messung von, mittels Abschnitten der charakteristischen Schicht gebildeten, Kapazitäten (genauer deren Dielektrika oder Streufeldern) beruhen. Es wird darauf hingewiesen, dass die im Kontext derartiger Ausführungsbeispiele offenbarten Funktionalitäten nicht auf elektrische Kapazitätsmessungen beschränkt sind. Domänen unterschiedlicher Dielektrizitätskonstanten können gemäß anderen Ausführungsbeispielen mittels Domänen unterschiedlicher Härten, oder Farben oder einer sonstigen messbaren Eigenschaft ersetzt werden, wobei entsprechende Messstrukturen dann bspw. keine elektrischen Messungen durchführen, sondern bspw. in Form von optischen Sensoren (z.B. für Farbe) ausgebildet sind.

Im Folgenden werden PUF-Strukturen (z.B. 300) gemäß Ausführungsbeispielen, sowie derartige charakteristische Strukturen umfassende Vorrichtungen (z.B. 200) und entsprechende Herstellungsverfahren offenbart, wobei die PUF-Struktur bspw. durch eine spontane Strukturbildung, als Beispiel eines Entmischungsvorgangs, erzeugt werden kann.

Vorrichtungen gemäß Ausführungsbeispielen und insbesondere zugehörige charakteristische Strukturen (z.B. 300), also z.B. PUF-Strukturen, können optional dazu ausgebildet sein, um einen zu schützenden Gegenstand zu umfassen. Eine Ausgestaltung als Beschichtung ist hierzu ebenfalls möglich. Durch einen nicht wiederholbaren Fingerabdruck in der Struktur, also bspw. die Verteilung der Domänen (z.B. 310, 320), kann ein Schlüssel generiert werden (bspw. mittels einer Auswertung der physikalischen Eigenschaft), mit dem erkannt werden kann, ob die Struktur (z.B. 300) verändert wurde. Ausführungsbeispiele beschreiben unter anderem eine durch spontane Strukturbildung erzeugte Schicht (z.B. 300), welche diesen Schlüssel erzeugt.

Ausführungsbeispiele adressieren somit unter anderem Problemstellungen, bei denen PUF-Strukturen (Physical Unclonable Functions) benutzt werden, um eindeutige, nicht wiederholbare Schlüssel zu generieren. Der Schlüssel kann z.B. in sicherheitsrelevanten, technischen Systemen wie ein Fingerabdruck dazu benutzt werden, um eine Zugriffsberechtigung zu gespeicherten Daten zu prüfen.

Falls die PUF-Struktur (z.B. 300) durch einen Angriff von außen in ihren Eigenschaften verändert wurde, ermöglichen Ausführungsbeispiele, bspw. mittels eines Algorithmus, den Unterschied des aus den aktuell gemessenen Eigenschaften generierten Schlüssel im Vergleich zum abgespeicherten Schlüssel zu erkennen. Damit kann ein Angriff erkannt werden und eine Schutzmaßnahme, wie Löschen der sensiblen Daten, kann angewendet werden.

Vorrichtungen gemäß Ausführungsbeispielen können dazu bspw. in Form von flachen, biegbaren Folien bereitgestellt werden, sodass zugehörige PUF-Strukturen benutzt werden können, um einen Gegenstand vor Angriffen zu schützen. Dazu können sie um den Gegenstand gewickelt werden, bis sie ihn, bspw. vollständig, umschließen. Der zu schützende Gegenstand (also bspw. ein zu schützendes Objekt) kann bspw. ein Datenspeicher, eine elektronische Schaltung, eine Kennzeichnung zur Verhinderung von Produktpiraterie oder eine Vorrichtung zur Authentifizierung von Berechtigungen in der Kommunikation von Computern, Banken, oder Behörden sein.

Vorrichtungen gemäß Ausführungsbeispielen ermöglichen eine wirtschaftliche Herstellung und hohe Zuverlässigkeit der charakteristischen Struktur. Solche wirtschaftlich herstellbaren und zuverlässig anwendbaren PUF-Strukturen können folgende Eigenschaften, individuell oder in Kombination, aufweisen:
- Vorrichtungen gemäß Ausführungsbeispielen können in Form von flachen, biegsamen Folien, welche um den zu schützenden Gegenstand gewickelt werden können, bereitgestellt werden.
- Vorrichtungen gemäß Ausführungsbeispielen können so ausgebildet sein, dass sie bei dem Wickeln und Falten nicht beschädigt werden und/oder die Eigenschaften wesentlich verändern. Die schlüsselgenerierenden Eigenschaften können für lange Zeit (z.B. größer 10 Jahre, z.B. nach einem entsprechenden Wickeln und Falten) unverändert bleiben. Bspw. können sich aber auch beim Falten oder Wickeln der Folie um das zu schützende Objekt die Kapazitäten (auch wenn bspw. nur geringfügig) messbar ändern. Deshalb kann bspw. eine "Initialisierungsmessung" erst nach dem Falt- oder Wickelvorgang durchgeführt werden. Die Initialisierungsmessung kann dabei bspw. eine Auswertung der physikalisch unklonbaren Funktion umfassen, also bspw. eine Bestimmung der Funktion in dem gefalteten bzw. umwickelten Zustand der Folie, bezüglich derer im Zuge einer darauffolgenden Überwachung des Objekts verglichen wird. Ferner ermöglichen Ausführungsbeispiele, dass eine entsprechende Veränderung (z.B. nach dem Wickeln oder Falten, bspw. nach der Initialisierungsmessung) kleiner ist als der Schwellenwert, der zur Erkennung einer Veränderung definiert wurde. Die physikalischen Eigenschaften, auf denen der Schlüssel beruht, können oder müssen sogar so langzeitstabil sein, dass eindeutig unterschieden werden kann, ob der Schlüssel glaubwürdig unverändert besteht, oder absichtlich verändert wurde.

- Die Langzeitstabilität kann gemäß Ausführungsbeispielen für Umgebungsbedingungen erfüllt sein oder erfüllt werden, wie sie im Automobilbau gefordert werden.
- Ausführungsbeispiele ermöglichen, dass die Eigenschaften unabhängig von einer Stromversorgung erhalten bleiben.
- Gemäß Ausführungsbeispielen kann die Strukturgröße im Bereich von etwa 100 µm (z.B. mit Domänengrößen zwischen 50 µm und 150 µm) sein, um Angriffe nach dem heutigen Stand der Technik erkennen zu können.

Optional kann anstatt einer Folie, die um den Gegenstand gewickelt wird, die PUF-Struktur gemäß Ausführungsbeispielen auch in Form einer Beschichtung, durch direktes Beschichten des Gegenstands, hergestellt werden.

Gemäß Ausführungsbeispielen bei denen die PUF-Struktur durch eine Folie realisiert wird (oder bei denen bspw. die Vorrichtung eine Folie ist), kann die Vorrichtung auf beiden Seiten der PUF Struktur ein Muster von Leiterbahnen aufweisen. Das Substrat, also die charakteristische Struktur, dazwischen wirkt als Dielektrikum mit den Eigenschaften Dicke und Dielektrizitätszahl. Diese bestimmen den lokalen Wert der Kapazität zwischen den Leiterbahnen.

Die Vielzahl von elektrischen Leiterbahnen überkreuzen sich dabei bspw. in regelmäßigen Strukturen. An den Überkreuzungspunkten des Gitterwerks entstehen viele kleine Kapazitäten, die sich über das Netzwerk zu einem Muster von kombinierten Kapazitäten aufsummieren. Wenn die Dicke oder Dielektrizitätszahl lokal stochastisch schwankt und an den verschiedenen Überkreuzungspunkten unterschiedlich ist, dann haben auch die einzelnen Kapazitäten verschiedene Werte. Der PUF-Schlüssel kann durch Auswertung des Musters der unterschiedlichen Kapazitäten generiert werden.

Sobald ein Angreifer versucht, durch mechanische Gewalt (z.B. Schneiden, Bohren, Schlitzen) die PUF-Folie zu durchdringen, um Zugriff auf den geschützten Inhalt zu bekommen, verändern sich die geometrischen und elektrischen Verhältnisse der Leiterbahnen, und damit verändert sich der PUF-Schlüssel. Wenn der bei der Aktivierung aktuell gelesene Schlüssel sich vom ursprünglich gespeicherten Schlüssel unterscheidet, wird ein Angriff erkannt und der Zugriff verhindert. Beispielsweise durch Löschen aller Daten.

Ausführungsbeispiele ermöglichen hierbei ein zufälliges Muster von Dielektrizitätszahlen aufgrund des zufälligen Musters von Domänen des ersten und zweiten Stoffes, die aufgrund ihrer abweichenden Eigenschaften an den Messpunkten zu unterschiedlichen Kapazitäten und somit einem stochastischen Kapazitätsmuster führen.

Ausführungsbeispiele ermöglichen es dabei mittels Ausnutzen der Entmischung des Precursors ein solches Muster von Kapazitätsschwankungen zu erzeugen für die PUF, ohne auf eine Variation der Dicke der charakteristischen Struktur oder ein Beimischen eines Fremdstoffes in die Schicht, wie bspw. eines Granulats in das Dielektrikum angewiesen zu sein. Ein solches Granulat kann dabei z.B. eine von der Matrix unterschiedene Dielektrizitätszahl besitzen und so die Variation bewirken. Weil das Granulat jedoch nur einen Teil der Dicke der Schicht ersetzt, verändert sich auch die resultierende dielektrische Wirkung auf die Kapazität nur anteilig. Im Gegensatz dazu ermöglicht die entmischungsbasierte Domänenbildung eine Ausbildung von signifikant variierenden physikalischen Eigenschaften und somit eine besonders aussagekräftige PUF. Ausführungsbeispiele können jedoch zusätzlich derartige Granulate umfassen. Diese können bspw. als Keimstellen für die Domänenbildung dienen.

Im Folgenden werden Vorteile von Ausführungsbeispielen weiter erläutert.

Eine Variation der Kapazitäten erhofft man sich gemäß konventioneller Ansätze durch statistische Streuung in den Parametern bei der Fertigung der Strukturen. Insbesondere die Dicke der dielektrischen Schicht bestimmt wesentlich die Kapazität. Um messtechnisch auswertbare Unterschiede in den Kapazitäten zu erhalten, muss gemäß konventioneller Ansätze aber zumindest ein Parameter der Fertigung deutlich und unkontrolliert streuen. Dies widerspricht aber dem fachmännischen Handeln und der in jeder funktionierenden Fertigungslinie dominierenden Philosophie, nämlich der maximal möglichen Homogenität und minimalen Streuung aller Parameter. Vorhandene Produktionsmaschinen in der Halbleiterindustrie müssten absichtlich unsauber oder grenzwertig betrieben werden, damit die erzeugte Schicht die hier erwünschten Streuungen zeigen.

Eine aus der Streuung in der Fertigung resultierende Verteilung eines Parameters kann als Verteilungsfunktion dargestellt werden. Sie hat einen Mittelwert, der am häufigsten auftritt, und darüber und darunter die für die PUF-Struktur erwünschten Abweichungen vom Mittelwert, die zur Schlüsselgenerierung benutzt werden.

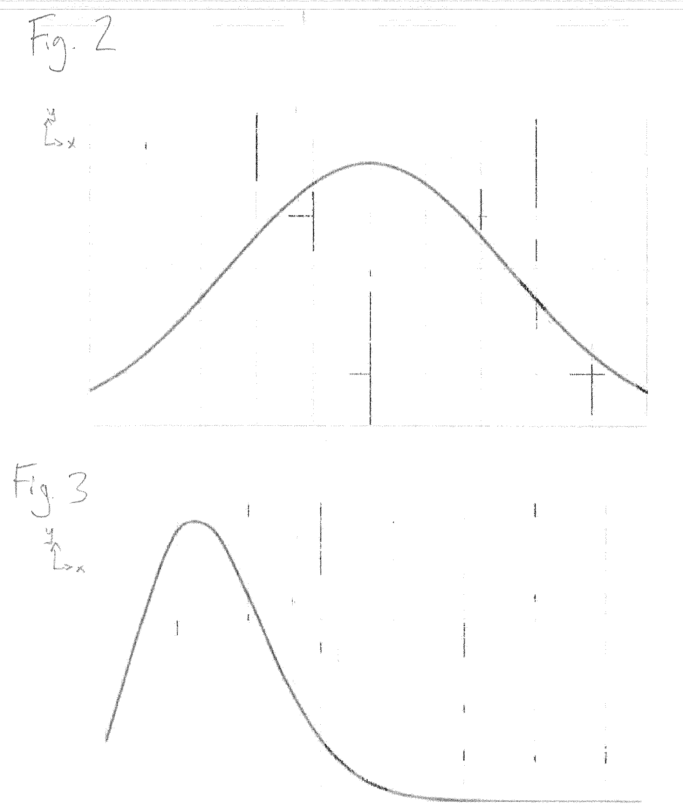

Bei kleinen Abweichungen vom erwünschten Mittelwert ist die Verteilung symmetrisch um den Mittelwert und kann durch eine Gauß-Verteilung angenähert werden (Es wird auf Fig. 2 verwiesen, welche eine symmetrische Gauß-Verteilung zeigt: y-Achse: Häufigkeit der Dickenwerte, x-Achse: Dickenwerte). Das ist für moderne, stabile Abscheideprozesse angemessen, wenn die Werte nur um wenige Promille schwanken.

Um einen messbaren Effekt auf die Kapazität zu haben, sollte oder muss die Variation der Schichtdicke gemäß konventioneller Ansätze aber etwa in der Größenordnung der Schicht liegen. Solche eine große Schichtdickenvariation beschreibt die Poisson-Verteilung besser (Es wird auf Fig. 3 verwiesen, welche eine Poisson-Verteilung zeigt: y-Achse: Häufigkeit der Dickenwerte, x-Achse: Dickenwerte. Die Poisson-Verteilung beginnt bei Wert Null der Dicke). Sie zeigt sehr deutlich, dass auch Werte von Null häufig vorkommen können. Die Dickenänderungen einer isolierenden Schicht können also so groß werden, dass die Dicke zu Null wird und ein Kurzschluss auftritt. Damit wäre diese Struktur unbrauchbar und Ausschuss.

Damit ist gezeigt, dass eine zufällige, durch einen schlecht kontrollierten Prozess erzeugte, Schichtdickenverteilung zwangsläufig zu einem hohen Ausschuss in der Fertigung führt.

Das gleiche wie für die Schichtdicke gilt für jeden anderen homogenen physikalischen Parameter, der zur Erzeugung von PUF-Strukturen benutzt werden soll.

Da Ausführungsbeispiele mittels Ausnutzen der Streuung in der Verteilung der Domänen mittels des Entmischens nicht auf eine Streuung der Dicke der charakteristischen Struktur angewiesen sind, ermöglichen Ausführungsbeispiele somit homogene Produktionsprozesse ohne grenzwertigen Betrieb der Maschinen. Zu weiteren Erläuterung wird im Folgenden auf erfindungsgemäß Lösungen näher eingegangen.

Anstatt zufällige Schwankungen des schlüsselgenerierenden Parameters durch einen "schlechten" Fertigungsprozess - also mit absichtlich großer Schwankungsbreite - zu provozieren, ermöglichen Ausführungsbeispiele die Verwendung eines stabilen Prozesses mit zwei alternierenden Zuständen des Parameters, der für die Schlüsselerzeugung verwendet wird. Daher ist es möglich, an den vielen, kleinen Kondensatoren deutlich unterschiedliche Kapazitäten zu messen, ohne die Gefahr (oder mit sehr geringer Gefahr) eines Ausfalls der ganzen Struktur.

Die PUF-Struktur kann bspw. durch Entmischung oder Selbstorganisation oder spontane Strukturbildung während der Schichterzeugung erzeugt werden. Dabei kann die dielektrische Schicht durch zumindest zwei im festen Zustand nicht mischbare Komponenten abgeschieden werden. Eine bspw. anfangs homogene flüssige Phase kann mit den üblichen Prozessen der Halbleiterindustrie (z.B. Siebdruck, Rakel, Sprühen, Spincoating) abgeschieden werden. Die Dicke kann dabei bei der Abscheidung und auch nach dem Aushärten im Wesentlichen homogen, bspw. im Wesentlichen konstant sein.

Zum Beispiel während einer Aushärtung, die durch Erkalten, Verdampfen des Lösungsmittels, Polymerisation oder Kondensation erfolgen kann, kann sich der energetisch günstige Zustand weg von der (z.B. homogenen) Mischung hin zur Entmischung verschieben. Es kann somit eine Mischungslücke auftreten. Dabei trennen sich die beiden Komponenten räumlich voneinander in kleine Domänen. Die Entmischung kann spontan auftreten, beginnend an infinitesimalen Variationen, ohne vorhersagbare Ordnung. Damit ist die räumliche Verteilung der Parameter rein zufällig und nicht wiederholbar.

Der variierende Parameter, der zur Erzeugung des PUF-Schlüssels verwendet wird, ist erfindungsgemäß bevorzugt die Dielektrizitätskonstante. Das Paar der sich entmischenden Komponenten kann so gewählt werden, dass sich dieser Parameter deutlich unterscheidet, die anderen für den Abscheideprozess relevanten Eigenschaften jedoch möglichst ähnlich sind.

Um einen PUF-Schlüssel zu generieren, können auch andere physikalische Größen ausgewertet werden. So kann gemäß Ausführungsbeispielen beispielsweise die lokale Variation der magnetischen Permeabilität, der elektrischen Leitfähigkeit, der optischen Absorption, der optische Streuung, der Farbe, des Brechungsindex oder der Härte zur Generierung eines Schlüssels benutzt werden.

Diese zeitliche Entwicklung der Phasentrennung kann mathematisch bspw. durch die Cahn-Hilliard-Gleichung beschrieben werden. Das Verhalten während der Phasentrennung wird durch die Diffusionskonstante, die relative Konzentration der beiden Komponenten und die Übergangszone zwischen den Phasen bestimmt. Es wird auf https://de.wikipedia.org/wiki/Entmischung(Thermodynamik) und https://en.wikipedia.org/wiki/Cahn%E2%80%93Hilliardequation verwiesen.

An dieser Stelle wird nochmals auf Fig. 1 verwiesen. Die charakteristische Struktur 300 zeigt eine simulierte Verteilung der Domänen 310, 320, z.B. bei Phasentrennung. Die Verteilung der Domänen bei Phasentrennung ist mittels der unterschiedlichen Domänenbereiche 310, 320 (weiß / schwarz) dargestellt.

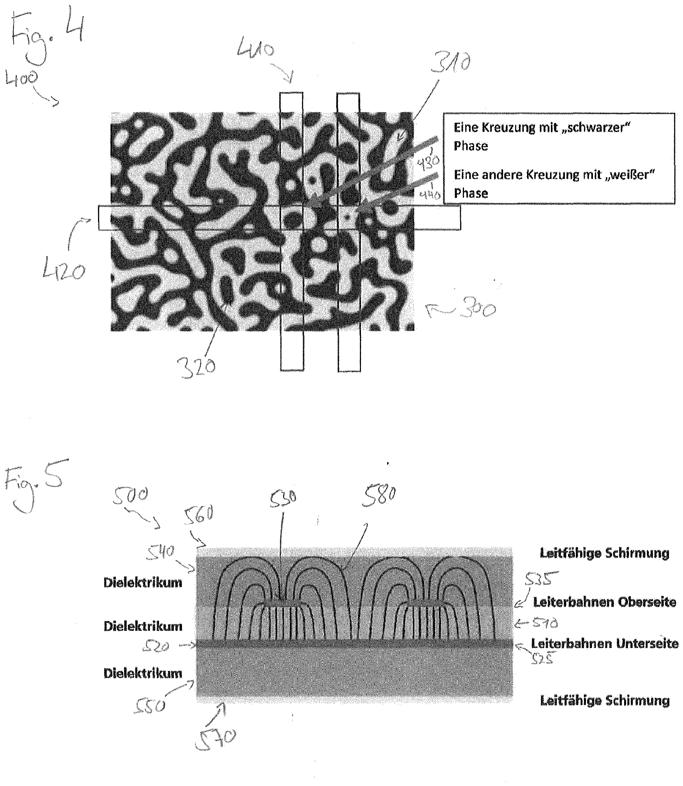

Fig. 4 zeigt eine schematische Ansicht einer Vorrichtung gemäß Ausführungsbeispielen mit optionalen Leiterbahnen. Fig. 4 zeigt die Vorrichtung 400, die zusätzlich zur charakteristischen Schicht 300 mit den Domänen 310 und 320 des ersten und zweiten Stoffes, Leiterbahnen 410 und 420 aufweist. Wie in Fig. 4 dargestellt, können Überkreuzungspunkte oder Überkreuzungsstellen 430, 440 (auch kurz Überkreuzungen) der Leiterbahnen bspw. entweder über der einen oder über der anderen Phase oder über einer Mischung liegen.

Der Bereich der Vorrichtung in welchem Leiterbahnen 410, 420 angeordnet sind kann bspw. die Messstruktur oder zumindest einen Teil der Messstruktur bilden. Die Teilbereiche an denen die physikalisch unklonbare Funktion ausgewertet wird kann dann ebenjenen Überlappungsbereichen 430, 440 der Leiterbahnen entsprechen, welche die Kapazitäten ausbilden.

An dieser Stelle sei darauf hingewiesen, dass erfindungsgemäße Entmischungsprozesse es ermöglichen einen in Fig. 4 gezeigten Zustand, also die Domänenverteilung so "einzufrieren", dass die relative Anordnung der Domänen 430, 440 zueinander und die physikalische Eigenschaft für zumindest ein Jahr oder für zumindest fünf Jahre oder für zumindest zehn Jahre ohne äußere Einwirkung sich nicht oder nur so geringfügig verändert, dass der Schlüssel aufgrund der physikalisch unklonbaren Funktion unverändert bleibt.

Für die Anwendung als Folie für PUF-Schlüssel ist eine zweidimensionale Lösung der Gleichung bevorzugt. Das heißt die Domänen gemäß Ausführungsbeispielen können größer als die Schichtdicke sein, die Phasengrenzen können sich also senkrecht durch die Schicht erstrecken. Die relative Konzentration der Komponenten kann ferner bevorzugt in etwa 50% zu 50% sein, damit die beiden Phasen in der endgültigen Schicht gleich häufig auftreten. Andere Verhältnisse sind jedoch auch möglich', die noch immer eine aussagekräftige Auswertung ermöglichen können, z.B. ein Verhältnis eines Gesamtvolumens von Domänen des ersten Stoffes und von Domänen des zweiten Stoffes der charakteristischen Struktur zwischen 30:70 und 70:30 oder zwischen 40:60 oder zwischen 45:55 und 55:45. Bspw. durch die Abkühlkurve und/oder andere Parameter kann ein erfindungsgemäßer Herstellungsprozess so gesteuert werden, dass das Wachstum der Domänen oder Phasen dann eingefroren wird, wenn die Größe der Domänen oder Phasen mit der Größe der einzelnen Teilmessbereiche, also bspw. Überlappungsbereiche von Leiterbahnen, bspw. Kapazitäten in etwa übereinstimmt oder bis zu etwa doppelt so groß ist.

Da sich erfindungsgemäß die Domänen durch die gesamte Schichtdicke erstrecken können, ist es eine wesentliche Verbesserung im Vergleich zu konventionellen Ansätzen mit beigemischten Granulat. Die Variation der dielektrischen Eigenschaft kann gemäß Ausführungsbeispielen in viel höherem Maß realisiert werden.

Zur gemessenen Kapazität trägt nicht nur die dielektrische Schicht zwischen den Leiterbahnen bei, sondern auch die Schicht zwischen Schirmung und Leiterbahnen. Eine Schirmung, etwa aus metallischer Folie, kann vorgesehen oder bspw. sogar notwendig sein, um von außen einwirkenden Feldern abgeschirmt zu sein. Die in Domänen strukturierte Schicht kann sich also sowohl zwischen den Leiterbahnen und/oder darüber und/oder darunter befinden.

Hierzu wird auf Fig. 5 verwiesen. Fig. 5 zeigt eine schematische Ansicht einer Vorrichtung gemäß Ausführungsbeispielen mit optionaler Schirmung. Fig. 5 zeigt in anderen Worten eine Skizzierung des Lagenaufbaus und des Feldlinienverlaufs inklusive Streufelder (hier ohne Skizzierung von unterschiedlichen Domänen durch Phasenseparation).

Die Vorrichtung 500 umfasst eine innere Schicht 510 in Form einer charakteristischen Struktur, welche als Dielektrikum ausgebildet ist. Die Schicht 510 kann also bspw. der Schicht 300 (oder einem Teil davon) aus Fig. 1 entsprechen. Ferner weist die Vorrichtung 500 überlappend angeordnete Leiterbahnen in separaten Leiterbahnebenen auf, nämlich Leiterbahnen 520 in einer unteren Ebene 525 und Leiterbahnen 530 in einer oberen Ebene 535.

Als weitere optionale Merkmale weist die Vorrichtung weitere Bereiche 540, 550 der charakteristischen Struktur zwischen den Leiterbahnebenen 525 und 535 und äußeren Schirmungen 560, 570 auf. Die Bereiche 540 und 550 sind als Dielektrika ausgebildet. Beispiele für Feldlinienverläufe sind mit Linien 580 gezeigt.

Bezugnehmend auf Fig. 5 kann die Messstruktur also Leiterbahnen 410, 420 in unterschiedlichen (z.B. in zu einander benachbarten) Leiterbahnebenen aufweisen. Mittels der Leiterbahnen 410, 420 kann eine von der charakteristischen Struktur (z.B. 510 oder auch 510+540+550) beeinflusster Kapazitätswert zwischen den Leiterbahnebenen, bspw.an Kreuzungen der Bahnen, gemessen werden.

Das Überlappen oder Überkreuzen von Leiterbahnen ist dabei in der Zusammenschau von Fig. 4 und 5 deutlich. Die Leiterbahnen können in verschiedenen, z.B. parallelen, Ebenen angeordnet sein und sich in einer Projektion, im Wesentlichen senkrecht zu einer Ebene der charakteristischen Schicht überschneiden, sodass die Leiterbahnen an den Überlappungsbereichen 430, 440 Kondensatoren ausbilden.

Etwas allgemeiner formuliert kann die Messstruktur also Teilbereiche aufweisen (hier als Beispiel die Bereiche um die herum sich die Leiterbahnen überlappen, z.B. Bereiche der charakteristischen Struktur in Bereichen 430, 440), an denen die physikalische Eigenschaft gemessen wird, oder eine Größe, auf welche die physikalische Größe einen Einfluss hat (z.B. Eigenschaft: Dielektrizitätszahl - Messung: Spannung), um anhand einer Auswertung einer Vielzahl solcher Teilbereiche die PUF bereitzustellen.

Wie in Fig. 5 gezeigt, kann sich die charakteristische Schicht dabei zwischen den Leiterbahnebenen oder auch darüber hinaus erstrecken, bspw. wenn die Anwesenheit der charakteristischen Schicht einen Einfluss auf den Messbereich hat, wie im gezeigten Fall aufgrund von Streufeldern. Hierbei sind jedwede Kombinationen möglich, also eine Ausgestaltung nur mit Schichtteil 510, oder 510+540 oder 510+550 oder 510+540+550 (optional jeweils mit zugehörigen Schirmungen).

Ganz allgemein können Ausführungsbeispiel eine Schirmungsschicht aufweisen, welche einen Umwelteinfluss auf die zu messende Eigenschaft verringert oder dagegen abschirmt. Die Schirmungen 560, 570 sind hier als Beispiel leitfähig, um einen Einfluss der Umwelt auf die elektrische Messung zu verhindern. Bspw. bei einer optischen Auswertung der charakteristischen Schicht könnte als Schirmung auch eine Lackierung zum Einsatz kommen. In anderen Worten kann die Schirmung auf die besondere, statistisch verteilte Eigenschaft der charakteristischen Schicht abgestimmt sein.

Die Domänengrenzen, die in Fig. 4 gezeigt sind können sich in einer Dickenrichtung der charakteristischen Struktur, also bspw. in Fig. 5 zwischen den beiden Leiterbahnebenen 525, 535, zu einem überwiegenden Anteil, bspw. zu mind. 50% bezüglich der Anzahl der Domänengrenzen, über eine gesamte Dicke der charakteristischen Struktur (510, 540, 550,) erstrecken.

Dies kann insbesondere ermöglichen, dass wie in den Bereichen 430 und 440 angezeigt ein Volumen der charakteristischen Struktur 300 in Teilbereichen, an denen sich die Leiterbahnen 410, 420 der zwei Leiterbahnebenen 525, 535 überkreuzen, zumindest zu 75% oder zumindest zu 80% oder zumindest zu 90% oder zumindest zu 95% entweder durch eine einzelne Domäne des ersten oder durch eine einzelne Domäne des zweiten Stoffes gebildet ist. Dies ermöglicht eine Messung von möglichst stark voneinander abweichenden Werten der physikalischen Eigenschaft und somit einer aussagekräftigen PUF.

An dieser Stelle sei nochmals auf den Vorteil von Vorrichtungen gemäß Ausführungsbeispielen hingewiesen, dass charakteristische Struktur 510 (oder auch 540 und 550) mit einer konstanten Dicke, also bspw. zwischen Ebenen 525 und 535 ausgebildet werden kann, da die stochastische Eigenschaft auf ihrer Zusammensetzung und nicht Geometrie beruht.

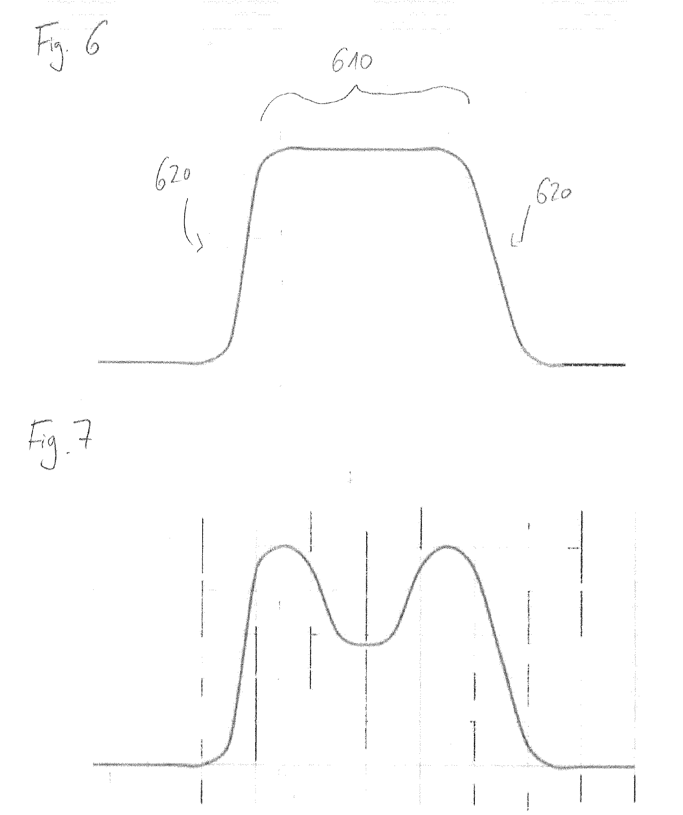

Für die Generierung eines PUF-Schlüssels wäre anstatt einer Gaußverteilung eine Top-Hat-Verteilung günstig, siehe bspw. Fig. 6. Diese hat im Wertebereich 610, der für die Schlüsselgenerierung nutzbar ist, nahezu eine Gleichverteilung. Am Rand 620 des Wertebereichs fällt die Häufigkeit steil ab, um bei stark abweichenden Werten schnell gegen Null zu gehen. Stark abweichende Werte sind also sehr selten. Damit ist die Gefahr eines Ausfalls der Produkte gebannt und der Gesamtprozess ist stabil und zuverlässig. Die idealisierte Gleichverteilung im mittleren Bereich ist jedoch technisch nicht realistisch.

Eine Schicht, die aus zwei Phasen mit unterschiedlichem Parameter besteht, wird typischerweise eine Verteilung mit zwei Maxima erzeugen, siehe bspw. Fig. 7. Das ist für die Anwendung als PUF-Schlüssel optimal. Der eine oder andere Maximalwert der physikalischen Eigenschaft, bspw. in Form der Dielektrizitätszahl wird gemessen, wenn die eine oder andere Komponente bevorzugt innerhalb des jeweiligen Teilmessbereichs, also bspw. Kondensators liegt. Wenn die Phasengrenzen innerhalb der Teilmessbereiche (z.B. Kondensatoren) liegen, können auch Zwischenwerte gemessen werden. Sehr hohe oder sehr niedrige Werte treten praktisch nicht auf. Damit ist das ein zuverlässiger Prozess ohne oder mit zumindest geringem Ausfallrisiko. Für die Berechnung eines PUF-Schlüssels ist es günstig, wenn innerhalb eines Teilmessbereichs (z.B. innerhalb eines Kondensators) bevorzugt die eine oder die andere Domäne, bspw. in Form einer Phase auftritt. Also die Domänen- oder Phasengrenzen selten innerhalb eines Teilmessbereichs (z.B. innerhalb eines Kondensators) auftreten. Dann treten mittlere Werte nicht häufig auf.

Beispielsweise oder idealerweise kann oder sollte die Größe der Domänen gemäß Ausführungsbeispielen etwa mit der Größe der einzelnen Teilmessbereiche, also bspw. Kapazitäten im Netzwerk der Leiterbahnen übereinstimmen oder etwas größer sein. Dann entfaltet sich die volle Dynamik der Werteverteilung. Sind die Domänen deutlich kleiner als die Kapazitäten, dann werden häufig Mischungen der Komponenten gemessen und die zwei Maxima werden undeutlich. Sind die Domänen deutlich größer als die Kapazitäten, dann sind die Maxima ausgeprägt, aber benachbarte Kapazitäten haben ähnliche Werte und damit sinkt die Varianz der Werte, die für die Schlüsselerzeugung zur Verfügung steht.

Empfohlene technische Realisierung (bspw. best practice) gemäß bevorzugter Ausführungsbeispiele:
Die Dicke der dielektrischen Schicht wird gemäß einigen Ausführungsbeispielen zum Beispiel oder sogar typisch im Bereich von 10 µm bis 200 µm gewählt, bevorzugt 50 µm (z.B. mit einer Toleranz von +/- 10%). Je nach technischen Möglichkeiten der photolithographischen Auflösung und Strukturierung kann die Breite der Leiterbahnen und der Zwischenräume (line - space, bspw. "Line-Space Geometrie") im Bereich 5 µm bis 500 µm, bevorzugt 100 µm (z.B. mit einer Toleranz von +/- 10%), gestaltet werden. Dies kann sich auch nach den Anforderungen der Sicherheit vor miniaturisierten Angriffen richten. Die Anzahl der parallel angeordneten Leiterbahnen kann sich nach der Größe des zu schützenden Gegenstandes und der Komplexität des PUF-Schlüssels richten. Sie kann von etwa 10 bis mehrere hundert (z.B. bis 200 oder bis 500 oder bis 900) gestaltet werden. Die stoffliche Realisierung der Schicht ist bevorzugt ein Gemisch aus Polymeren. Sie sollen oder können bspw. oberhalb einer Temperatur oder Lösungsmittelkonzentration mischbar sein (z.B. homogen mischbar sein) und darunter spontane Entmischung zeigen. Dabei sollen oder können die beiden Phasen in Bezug auf die physikalische Eigenschaft, wie bspw. Dielektrizitätszahl möglichst unterschiedlich sein. Gleichzeitig soll oder kann das Endprodukt für lange Zeit möglichst stabil gegen Umwelteinflüsse sein, um das zuverlässige Auslesen des PUF-Schlüssels über die gesamte Lebenszeit zu gewährleisten.

Ausführungsbeispiele umfassen Polymermischungen mit Materialkombinationen, bei denen eine Phasenseparation auftritt. Ein Beispiel dafür ist eine Polymermischung aus hPE (hydrogeniertes Polyethylen) und dPP (deuteriertes Polypropylen) (siehe z.B. https://onlinelibrary.wiley.com/doi/epdf/10.1111/jmi.12110). Ein weiteres Beispiel ist eine Mischung aus den Materialien dPMMA (deuteriertes Polymethylmethacrylat) und SAN (StyrolAcrylnitril-Copolymer) (siehe z.B. https://link.springer.com/article/10.1023/A:1022135031363). Ein drittes Beispiel ist die Mischung der Polymere PS (Polystyrol) und PVME (Polyvinylmethylether), deren Entmischungseigenschaften in folgender Quelle näher beschrieben sind: https://citeseerx.ist.psu.edu/document?repid=rep1&type=pdf&doi=2b18a0ee228a7872a8ad4 46e170fbb71f433e5e8. In dieser Veröffentlichung sind Entmischungsstrukturen zu sehen, welche größer als 100 µm sind.

Diese Größenordnung ist besonders relevant für die aktuell verwendeten Leiterbahnbreiten gemäß einiger Ausführungsbeispiele, welche zur Erstellung der Kondensatorstrukturen verwendet werden. Zudem unterscheiden sich die Permittivitäten der beiden Polymere deutlich voneinander, was einen Vorteil bei der späteren Generierung eines Schlüssels aus den PUF-Strukturen bringen kann. Die Permittivität von PS beträgt etwa 2,5, während die Permittivität von PVME etwa bei 3,5 (oder höher) liegt.

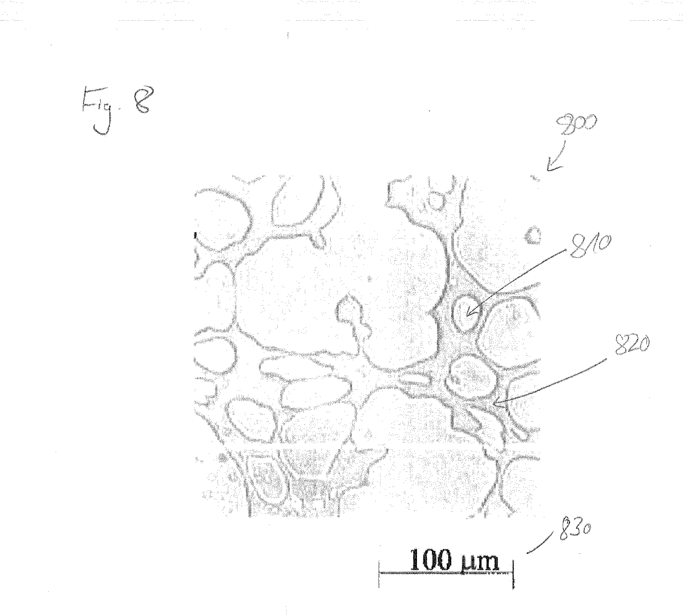

Fig. 8 zeigt eine schematische Ansicht einer charakteristischen Struktur basierend auf einer Strukturbildung bei Mischung aus PS und PVME. Die charakteristische Struktur umfasst Domänen 810 und 820 mit unterschiedlichen Eigenschaften. Die Größenverhältnisse sind mit Skala 830 gezeigt.

Alle hierin aufgeführten Aufzählungen der Materialien, Umwelteinflüsse, elektrischen Eigenschaften und optischen Eigenschaften sind hierbei als beispielhaft und nicht als abschließend anzusehen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Dies betrifft bspw. die Auswertung der PUF-Strukturen oder eine Erkennung eines Angriffs auf einen zu schützenden Gegenstand, der mittels einer erfindungsgemäßen Vorrichtung umschlossen ist. Ausführungsbeispiele können also zusätzlich entsprechende Auswertungseinheiten aufweisen.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

## Patentansprüche

1. Verfahren zur Herstellung einer Vorrichtung zur Bereitstellung einer physikalisch unklonbaren Funktion, die auf einer charakteristischen Struktur (300, 510, 540, 550, 800) basiert; wobei das Verfahren die folgenden Merkmale aufweist:
Erzeugen der charakteristischen Struktur mittels
Lokalem Entmischen eines Precursors (100), um eine Vielzahl von Domänen (310, 810) eines ersten Stoffs und eine Vielzahl von Domänen (320, 820) eines zweiten Stoffs zu erhalten, um eine zufällige räumliche Verteilung der Domänen des ersten und zweiten Stoffs in einem Messbereich zu erhalten,
wobei Domänen des ersten Stoffs und Domänen des zweiten Stoffs sich in einer physikalischen Eigenschaft unterscheiden,
so dass Unterschiede in der physikalischen Eigenschaft die physikalisch unklonbare Funktion zumindest teilweise bereitstellen.

2. Verfahren gemäß Anspruch 1 ferner umfassend:
Anordnen einer Messstruktur (410, 420, 520, 530), für eine Messung der physikalischen Eigenschaft an einer Vielzahl von Teilbereichen (430, 440) in dem Messbereich, um die physikalisch unklonbare Funktion auszuwerten.

3. Verfahren nach Anspruch 1 oder 2,
wobei das lokale Entmischen des Precursors (100) mittels einer Selbstorganisation und/oder einer spontanen Strukturbildung des ersten und zweiten Stoffes durchgeführt wird.

4. Verfahren nach einem der vorigen Ansprüche,
wobei der Precursor (100) in einer ersten Phase bereitgestellt wird; und
wobei das lokale Entmischen des Precursors eine Änderung eines Zustands des Precursors aufweist, um einen Phasenübergang zu bewirken, um die Vielzahl von Domänen (310, 320, 810, 820) des ersten und zweiten Stoffs zu erhalten.

5. Verfahren nach einem der vorigen Ansprüche,
wobei das lokale Entmischen des Precursors (100) basierend auf einer Änderung der Temperatur des Precursors bewirkt wird; und/oder
wobei das lokale Entmischen des Precursors basierend auf einer Änderung des Umgebungsdrucks des Precursors bewirkt wird; und/oder;
wobei das lokale Entmischen des Precursors basierend auf einer Bestrahlung des Precursors bewirkt wird; und/oder
wobei das lokale Entmischen des Precursors durch die Zugabe eines Katalysators bewirkt wird; und/oder
wobei der Precursor ferner ein Lösungsmittel umfasst und wobei das lokale Entmischen des Precursors basierend auf einem Verdampfen des Lösungsmittels bewirkt wird; und/oder
wobei das lokale Entmischen des Precursors basierend auf einer Polymerisation des Precursors bewirkt wird.

6. Verfahren gemäß einem der vorigen Ansprüche, wobei das lokale Entmischen des Precursors (100) basierend auf einer Aggregation des ersten Stoffes an ersten Aggregationskernen und/oder einer Aggregation des zweiten Stoffes an zweiten Aggregationskernen bewirkt wird und das Verfahren ferner aufweist:
Beifügen von Partikeln zu dem Precursor, wobei die Partikel dazu ausgebildet sind, um Aggregationskerne für die Vielzahl von Domänen (310, 320, 810, 820) des ersten und/oder zweiten Stoffs beim lokalen Entmischen des Precursors zu bilden.

7. Verfahren nach einem der vorigen Ansprüche,
wobei der Precursor (100) beim lokalen Entmischen mittels einer Änderung der Umgebungsbedingungen in zumindest drei Stoffe zerfällt,
wobei die Vielzahl von Domänen (310, 320, 810, 820) von zumindest zwei der drei Stoffe gebildet sind.

8. Vorrichtung zur Bereitstellung einer physikalisch unklonbaren Funktion mit
einer charakteristischen Struktur (300, 510, 540, 550, 800);
wobei die charakteristische Struktur für die physikalisch unklonbare Funktion einen Messbereich mit Domänen (310, 810) eines ersten Stoffs und Domänen (320, 820) eines, von dem ersten Stoff verschiedenen und entmischten, zweiten Stoffs aufweist;
wobei Domänen des ersten Stoffs und Domänen des zweiten Stoffs sich in einer physikalischen Eigenschaft unterscheiden.

9. Vorrichtung gemäß Anspruch 8, ferner umfassend
eine Messstruktur (410, 420, 520, 530), die ausgebildet ist, um die physikalische Eigenschaft an einer Vielzahl von Teilbereichen (430, 440) in dem Messbereich zu messen, um die physikalisch unklonbare Funktion auszuwerten.

10. Vorrichtung zur Auswertung einer physikalisch unklonbaren Funktion erhältlich durch das Herstellungsverfahren nach einem der Ansprüche 1 bis 7.

11. Vorrichtung nach einem der Ansprüche 8 bis 10,
wobei die Vorrichtung eine flache, biegbare Folie oder eine Beschichtung ist.

12. Vorrichtung nach Anspruch 11,
wobei eine Dicke der charakteristischen Struktur (300, 510, 540, 550, 800) der Folie oder eine Dicke der charakteristischen Struktur der Beschichtung im Wesentlichen konstant ist.

13. Vorrichtung nach einem der Ansprüche 8 bis 12,
wobei sich Domänengrenzen zwischen dem ersten Stoff und dem zweiten Stoff sich zu einem überwiegenden Anteil über eine gesamte Dicke der charakteristischen Struktur (300, 510, 540, 550, 800) erstrecken.

14. Vorrichtung nach einem der Ansprüche 8 bis 13,
wobei die Domänen (310, 320, 810, 820) des ersten und zweiten Stoffes dazu ausgebildet sind, um ihre relative Anordnung zueinander und die physikalische Eigenschaft für zumindest ein Jahr oder für zumindest fünf Jahre oder für zumindest 10 Jahre ohne äußere Einwirkung nicht oder nur so geringfügig zu verändern, dass die physikalisch unklonbare Funktion unverändert bleibt.

15. Vorrichtung nach einem der Ansprüche 8 bis 14, mit einer Messstruktur (410, 420, 520, 530), die ausgebildet ist, um die physikalische Eigenschaft an einer Vielzahl von Teilbereichen (430, 440) in dem Messbereich zu messen, um die physikalisch unklonbare Funktion auszuwerten;
wobei die Messstruktur Leiterbahnen (410, 420, 520, 530) in zwei Leiterbahnebenen (525, 535) aufweist, die sich überkreuzen; und
wobei die Leiterbahnen in den zwei Leiterbahnebenen dazu ausgebildet sind, um durch eine Messung von Kapazitätswerten der charakteristischen Struktur (300, 510, 540, 550, 800) an Teilbereichen (430, 440), an denen sich die Leiterbahnen der zwei Leiterbahnebenen überkreuzen, die physikalisch unklonbare Funktion auszubilden.

16. Vorrichtung nach Anspruch 15,
wobei die charakteristische Struktur (510) zumindest teilweise zwischen den zwei Leiterbahnebenen (525, 535) angeordnet ist.

17. Vorrichtung nach Anspruch 15 oder 16,
wobei die charakteristische Struktur (540, 550) zumindest teilweise zwischen einer der Leiterbahnebenen (525, 535) und zumindest einer Schirmungsstruktur (560, 570) angeordnet ist; und/oder
wobei die charakteristische Struktur (540, 550) zumindest teilweise zwischen einer ersten Leiterbahnebene (535) der zwei Leiterbahnebenen (525, 535) und einer ersten Schirmungsstruktur (560) und zwischen einer zweiten Leiterbahnebene (525) der zwei Leiterbahnebenen (525, 535) und einer zweiten Schirmungsstruktur (570) angeordnet ist.

18. Vorrichtung nach einem der Ansprüche 15 bis 17,
wobei ein Volumen der charakteristischen Struktur (300, 510, 540, 550, 800) in Teilbereichen, an denen sich die Leiterbahnen (410, 420, 520, 530) der zwei Leiterbahnebenen (525, 535) überkreuzen, zumindest zu 75% oder zumindest zu 80% oder zumindest zu 90% oder zumindest zu 95% entweder durch eine einzelne Domäne des ersten oder durch eine einzelne Domäne des zweiten Stoffes gebildet ist.

19. Vorrichtung nach einem der Ansprüche 8 bis 18,
wobei ein Verhältnis eines Gesamtvolumens von Domänen (310, 810) des ersten Stoffes und von Domänen (320, 820) des zweiten Stoffes der charakteristischen Struktur (300, 510, 540, 550, 800) zwischen 30:70 und 70:30 liegt.

## Geänderte Patentansprüche

### Geänderte Patentansprüche gemäss Regel 137(2) EPÜ.

1. Verfahren zur Herstellung einer Vorrichtung zur Bereitstellung einer physikalisch unklonbaren Funktion, die auf einer charakteristischen Struktur (300, 510, 540, 550, 800) basiert; wobei das Verfahren die folgenden Merkmale aufweist:
Erzeugen der charakteristischen Struktur mittels
Lokalem Entmischen eines Precursors (100), um eine Vielzahl von Domänen (310, 810) eines ersten Stoffs und eine Vielzahl von Domänen (320, 820) eines zweiten Stoffs zu erhalten, um eine zufällige räumliche Verteilung der Domänen des ersten und zweiten Stoffs in einem Messbereich zu erhalten,
wobei der erste Stoff ein erstes Polymer und der zweite Stoff ein zweites Polymer ist;
wobei Domänen des ersten Stoffs und Domänen des zweiten Stoffs sich in einer physikalischen Eigenschaft unterscheiden,
wobei Domänen des ersten Stoffs und Domänen des zweiten Stoffs sich in ihren Dielektrizitätskonstanten unterscheiden,
so dass Unterschiede in der physikalischen Eigenschaft die physikalisch unklonbare Funktion mittels, von Abschnitten der charakteristischen Schicht gebildeten, Dielektrika zumindest teilweise bereitstellen;
wobei ein Verhältnis eines Gesamtvolumens von Domänen (310, 810) des ersten Stoffes und von Domänen (320, 820) des zweiten Stoffes der charakteristischen Struktur (300, 510, 540, 550, 800) zwischen 30:70 und 70:30 liegt.

2. Verfahren gemäß Anspruch 1 ferner umfassend:
Anordnen einer Messstruktur (410, 420, 520, 530), für eine Messung von, mittels Abschnitten der charakteristischen Schicht gebildeten, Kapazitäten an einer Vielzahl von Teilbereichen (430, 440) in dem Messbereich, um die physikalisch unklonbare Funktion auszuwerten.

3. Verfahren nach Anspruch 1 oder 2,
wobei das lokale Entmischen des Precursors (100) mittels einer Selbstorganisation und/oder einer spontanen Strukturbildung des ersten und zweiten Stoffes durchgeführt wird.

4. Verfahren nach einem der vorigen Ansprüche,
wobei der Precursor (100) in einer ersten Phase bereitgestellt wird; und
wobei das lokale Entmischen des Precursors eine Änderung eines Zustands des Precursors aufweist, um einen Phasenübergang zu bewirken, um die Vielzahl von Domänen (310, 320, 810, 820) des ersten und zweiten Stoffs zu erhalten.

5. Verfahren nach einem der vorigen Ansprüche,
wobei das lokale Entmischen des Precursors (100) basierend auf einer Änderung der Temperatur des Precursors bewirkt wird; und/oder
wobei das lokale Entmischen des Precursors basierend auf einer Änderung des Umgebungsdrucks des Precursors bewirkt wird; und/oder;
wobei das lokale Entmischen des Precursors basierend auf einer Bestrahlung des Precursors bewirkt wird; und/oder
wobei das lokale Entmischen des Precursors durch die Zugabe eines Katalysators bewirkt wird; und/oder
wobei der Precursor ferner ein Lösungsmittel umfasst und wobei das lokale Entmischen des Precursors basierend auf einem Verdampfen des Lösungsmittels bewirkt wird; und/oder
wobei das lokale Entmischen des Precursors basierend auf einer Polymerisation des Precursors bewirkt wird.

6. Verfahren gemäß einem der vorigen Ansprüche, wobei das lokale Entmischen des Precursors (100) basierend auf einer Aggregation des ersten Stoffes an ersten Aggregationskernen und/oder einer Aggregation des zweiten Stoffes an zweiten Aggregationskernen bewirkt wird und das Verfahren ferner aufweist:
Beifügen von Partikeln zu dem Precursor, wobei die Partikel dazu ausgebildet sind, um Aggregationskerne für die Vielzahl von Domänen (310, 320, 810, 820) des ersten und/oder zweiten Stoffs beim lokalen Entmischen des Precursors zu bilden.

7. Verfahren nach einem der vorigen Ansprüche,
wobei der Precursor (100) beim lokalen Entmischen mittels einer Änderung der Umgebungsbedingungen in zumindest drei Stoffe zerfällt,
wobei die Vielzahl von Domänen (310, 320, 810, 820) von zumindest zwei der drei Stoffe gebildet sind.
